# EUROPÄISCHE PATENTSCHRIFT

(11) **EP 3 212 471 B1**
(45) Veröffentlichungstag und Bekanntmachung des Hinweises auf die Patenterteilung: **05.06.2019**
(21) Anmeldenummer: 15788325.7
(22) Anmeldetag: 29.09.2015
(51) Int. Cl.: B60R 22/34, B60R 22/46, B60R 22/28

(54) **SICHERHEITSGURTAUFROLLER**
SEAT BELT RETRACTOR
ENROULEUR DE CEINTURE DE SÉCURITÉ

(30) Priorität: 30.10.2014 DE 102014015932
(43) Veröffentlichungstag der Anmeldung: 06.09.2017
(73) Patentinhaber: TRW Automotive GmbH, 73553 Alfdorf (DE)
(72) Erfinder: GROSSKOPF, Anna, 73529 Schwäbisch Gmünd (DE); BOHN, Jens, 73553 Alfdorf (DE); KIELWEIN, Thomas, 73569 Eschach (DE); PFISTER, Beate, 74321 Bietigheim (DE)
(74) Vertreter: ZF TRW Patentabteilung
(86) Internationale Anmeldenummer: PCT/EP2015/002081
(87) Internationale Veröffentlichungsnummer: WO 2016/066252

(56) Entgegenhaltungen:
- DE-A1-102007 050 867
- DE-B3-102006 023 258
- DE-U1- 20 015 402

## Beschreibung

Die Erfindung betrifft einen Sicherheitsgurtaufroller für ein Fahrzeug, mit einem Rahmen, in dem eine Gurtspule gelagert ist, die einen Spulenkörper sowie einen ersten Flansch und einen zweiten Flansch aufweist, die an den axialen Enden des Spulenkörpers vorgesehen sind und jeweils in einer Aufnahme des Rahmen angeordnet sind, wobei der erste Flansch relativ zum Spulenkörper verdrehbar ist, und wobei zwischen dem ersten Flansch und dem Spulenkörper ein Kraftbegrenzer vorgesehen ist, und an der Aufnahme Rastzähne und am ersten Flansch eine mit den Rastzähnen korrespondierende Verzahnung vorgesehen sind.

Gurtspulen für einen Sicherheitsgurtaufroller in einem Fahrzeug weisen einen Grundkörper auf, auf dem ein Gurtband aufgewickelt werden kann, sowie zwei an den axialen Enden des Grundköpers vorgesehene Flansche, mit denen die Gurtspule in einem Rahmen eines Gurtaufrollers gelagert ist. Die Blockierung der Gurtspule erfolgt üblicherweise, indem einer oder beide Flansche im Rahmen fixiert bzw. blockiert werden. Durch einen zwischen Grundkörper und Flansch angeordneten Kraftbegrenzer ist häufig eine begrenzte Drehung und somit ein begrenzter Gurtbandauszug auch bei blockierten Flanschen möglich, so dass die auf den Fahrzeuginsassen wirkenden Kräfte reduziert werden können.

Um diese Verdrehung zu begrenzen, sind häufig Anschläge vorgesehen, die nach einem definierten Drehwinkel des Grundkörpers zu den Flanschen eine weitere Verdrehung blockieren. Diese Anschläge können einen weiteren Kraftbegrenzer bilden, indem einer der Anschläge als Schneide ausgebildet ist, die Späne von dem jeweils anderen Anschlag abhobeln kann. Durch die Form der Vorsprünge ist beispielsweise eine progressive Kraftbegrenzung möglich, sodass nach einer bestimmten Anzahl Umdrehungen kein weiteres Verdrehen der Gurtspule zu den Flanschen möglich ist.

Die Konstruktion dieser Flansche ist häufig sehr aufwendig. Zudem ist es erforderlich, die Flansche in axialer Richtung an der Gurtspule zu fixieren, da durch ein axiales Spiel die Funktion dieser Anschläge bzw. eines solchen Kraftbegrenzers beeinträchtigt werden könnte. So kann durch ein axiales Spiel die Schneide eines durch die Anschläge gebildeten spanenden Kraftbegrenzers verkanten. Darüber hinaus ist es nicht erwünscht, dass sich die in einem solchen Kraftbegrenzer abgehobelte Späne lose im Inneren des Gurtaufrollers befinden.

DE102006059100A1 offenbart einen Sicherheitsgurtaufroller gemäß dem Oberbegriff des Patentanspruchs 1.

Aufgabe der Erfindung ist es, einen Sicherheitsgurtaufroller der eingangs genannten Art bereitzustellen, die einen stabilen Aufbau aufweist, und so eine zuverlässige Kraftbegrenzung bzw. Blockierung des Sicherheitsgurtes ermöglicht.

Zur Lösung der Aufgabe ist ein Sicherheitsgurtaufroller für ein Fahrzeug vorgesehen, mit einem Rahmen, in dem eine Gurtspule gelagert ist, die einen Spulenkörper sowie einen ersten Flansch und einen zweiten Flansch aufweist, die an den axialen Enden des Spulenkörpers vorgesehen sind und jeweils in einer Aufnahme des Rahmen angeordnet sind, wobei der erste Flansch relativ zum Spulenkörper verdrehbar ist, und wobei zwischen dem ersten Flansch und dem Spulenkörper ein Kraftbegrenzer vorgesehen ist, und an der Aufnahme Rastzähne und am ersten Flansch eine mit den Rastzähnen korrespondierende Verzahnung vorgesehen sind. Erfindungsgemäß ist der zweite Flansch relativ zum Spulenkörper verdrehbar und am zweiten Flansch und/oder am Spulenkörper sind zusammenwirkende Anschläge vorgesehen, die die Verdrehung des zweiten Flansches relativ zum Spulenkörper begrenzen, und der zweite Flansch weist eine Umfangswand auf, die das dem zweiten Flansch zugewandte axiale Ende des Spulenkörpers in Umfangsrichtung umschließt.

Der zweite Flansch ist also topfartig ausgebildet und umschließt das axiale Ende des Grundkörpers. Dies ermöglicht zum einen eine bessere Abstützung der Gurtspule bzw. des Grundkörpers am Rahmen, da der Rahmen so auf Höhe des Spulenkörpers am zweiten Flansch angreifen kann. Zudem ist ein axiales Abrutschen des zweiten Flansches vom Grundkörper nicht möglich, sodass die Gurtspule stabiler ausgebildet ist und die Anschläge zuverlässig zusammenwirken können. Des Weiteren werden bei der Kraftbegrenzung anfallende Späne im zweiten Flansch aufgefangen, sodass diese nicht lose aus der Gurtspule herausfallen können.

Vorzugsweise sind am ersten Flansch eine Verzahnung und an der Aufnahme des ersten Flansches korrespondierende Rastzähne vorgesehen, so dass die Gurtspule durch Verschwenken im Rahmen in die Rastzähne eingesteuert und blockiert wird.

Um eine möglichst gute Lastübertragung von der Gurtspule auf den Rahmen des Sicherheitsgurtaufrollers zu gewährleisten, sind vorzugsweise an der Umfangswand außenseitig eine Verzahnung und an der Aufnahme des zweiten Flansches korrespondierende Rastzähne vorgesehen, in die die Verzahnung eingreifen kann. Dies ermöglicht eine direkte Lastübertragung bzw. eine Abstützung des Spulenkörpers am Rahmen.

Die Verzahnung kann beispielsweise durch eine entsprechende Prägung der Umfangswand oder entsprechende Vorsprünge an der Umfangswand gebildet sein. Um das Gewicht des Flansches und somit der Gurtspule zu reduzieren und die Herstellung des Flansches zu vereinfachen, ist die Verzahnung aber vorzugsweise durch Unterbrechungen der Umfangswand gebildet. Dadurch ist zum einen eine geringere Materialdicke der Umfangswand realisierbar. Zum anderen kann die Verzahnung einfach hergestellt werden, indem die Aussparungen bzw. die Unterbrechungen ausgestanzt oder ausgeschnitten werden.

Eine einfache Herstellung des zweiten Flansches ist möglich, indem dieser aus einem einstückigen, insbesondere ebenen Blechteil gebildet ist. Dieses Blechteil wird so umgeformt, dass die Umfangswand einstückig mit dem übrigen Flansch ausgebildet ist. Insbesondere können die Unterbrechungen der Umfangswand, die die Verzahnung bilden, vor dem Umformen des Blechteils in dieses eingebracht werden, also das noch ebene Blechteil derart bearbeitet werden, dass nach dem Umformen kein weiteres Einbringen von Unterbrechungen oder anderen Aussparungen erforderlich ist.

Die Anschläge am zweiten Flansch und am Spulenkörper können auf verschiedene Weise ausgebildet sein. Es ist beispielsweise denkbar, dass diese radial nach innen bzw. nach außen vorstehen. Um den Durchmesser der Gurtspule bzw. der Flansche zu reduzieren, sind die Anschläge aber vorzugsweise in axialer Richtung in entgegengesetzter Richtung vom zweiten Flansch und vom Spulenkörper vorgesehen. Dies ist insbesondere von Vorteil, wenn die Verzahnung an der Außenseite der Umfangswand durch Unterbrechungen der Umfangswand gebildet ist.

Der Anschlag am zweiten Flansch ist beispielsweise durch einen Vorsprung gebildet. Insbesondere ist dieser Vorsprung durch eine Prägung gebildet, wodurch ein einfaches Einbringen eines solchen Anschlages möglich ist. Ein solcher Anschlag kann auch vor dem Umformen des Blechteils, beispielsweise in einem Arbeitsschritt mit dem Ausstanzen der Unterbrechungen, die die Verzahnung bilden, hergestellt werden.

Der Anschlag am Spulenkörper kann im Spulenkörper integriert oder durch einen Bolzen gebildet sein, der in axialer Richtung aus dem Spulenkörper ragt. Da dieser Bolzen in einer Aussparung im Spulenkörper gelagert ist, ist eine gute Abstützung dieses Bolzens gewährleistet. Zudem muss am Spulenkörper lediglich eine Aussparung vorgesehen sein.

Der Anschlag im Spulenkörper kann durch eine Schneide ersetzt werden, sodass bei hohen Kräften der gegenüberliegende Anschlag radial abgetragen wird, sodass eine zusätzliche progressive oder degressive Kraftbegrenzung bei zu hohen Kräften auf die Gurtspule bzw. das Gurtband möglich ist.

Zwischen dem zweiten Flansch und dem Spulenkörper kann zusätzlich ein Scherpin mit einer Sollbruchstelle vorgesehen sein, der eine relative Bewegung des zweiten Flansches und des Spulenkörpers erst bei Überschreiten eines definierten Kraftniveaus zulässt.

Der Kraftbegrenzer zwischen dem ersten Flansch und dem Spulenkörper kann beispielsweise ein Torsionsstab sein, der einen geringen Bauraum innerhalb des Spulenkörpers benötigt, sodass der Bauraum für die Gurtspule reduziert werden kann.

Weitere Vorteile und Merkmale finden sich in der nachfolgenden Beschreibung in Verbindung mit den beigefügten Zeichnungen. In diesen zeigen:
- Figur 1 eine Explosionsdarstellung einer erfindungsgemäßen Gurtspule,
- Figur 2 eine Schnittansicht durch die Gurtspule aus Figur 1,
- Figur 3 eine axiale Draufsicht auf die Gurtspule aus Figur 2,
- Figur 4 eine perspektivische Ansicht eines Sicherheitsgurtaufrollers mit der Gurtspule aus den Figuren 1 bis 3,
- Figur 5 eine axiale Draufsicht auf den Sicherheitsgurtaufroller aus Figur 4,
- Figur 6 eine Detailansicht des Sicherheitsgurtaufrollers aus Figur 4,
- Figur 7 eine zweite Ausführungsform einer erfindungsgemäßen Gurtspule,
- Figur 8 eine Schnittansicht durch die Gurtspule aus Figur 7,
- Figur 9 eine axiale Draufsicht auf die Gurtspule aus Figur 8,
- Figur 10 eine perspektivische Ansicht eines Sicherheitsgurtaufrollers mit der Gurtspule aus den Figuren 7 bis 9, und

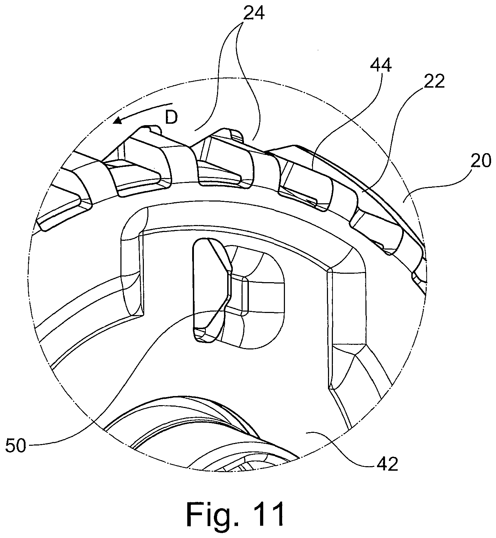

- Figur 11 eine Detailansicht des Sicherheitsgurtaufrollers aus Figur 10.

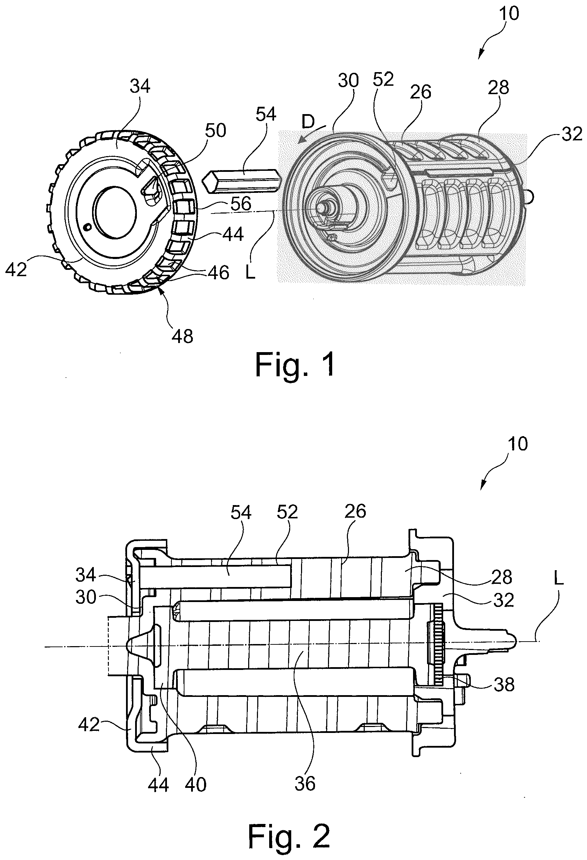

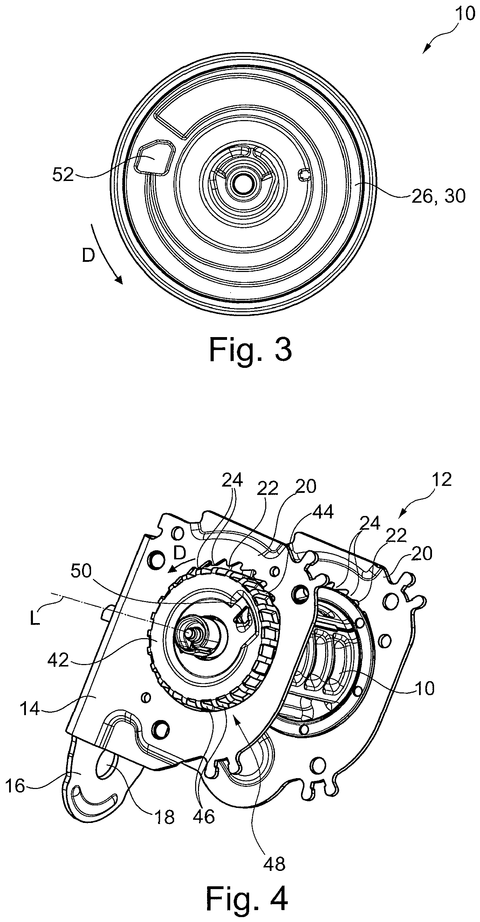

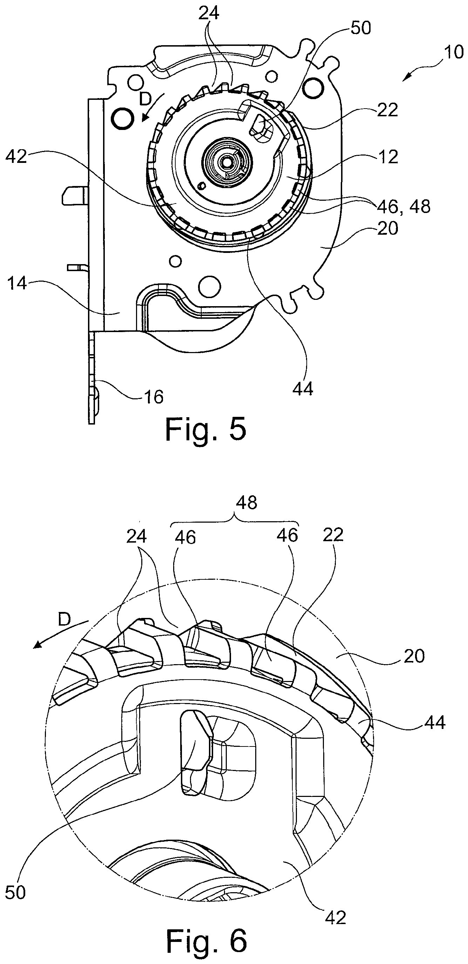

In den Figuren 1 bis 3 ist eine Gurtspule 10 für einen in den Figuren 4 bis 6 gezeigten Sicherheitsgurtaufroller 12 gezeigt. Der Sicherheitsgurtaufroller 12 hat einen Rahmen 14 mit einer Grundplatte 16, die eine Öffnung 18 zur fahrzeugfesten Montage des Sicherheitsgurtaufrollers 12 aufweist, sowie zwei parallele, gegenüberliegende Laschen 20, die jeweils eine Aufnahme 22 für die Gurtspule 10 aufweisen. Am Rand der Aufnahmen 22 sind jeweils Rastzähne 24 vorgesehen, um, wie nachfolgend erläutert wird, die Gurtspule 10 zu blockieren.

Die Gurtspule 10 hat einen Spulenkörper 26, auf dem ein Gurtband aufgewickelt werden kann und der um eine Längsachse L drehbar ist. An den axialen Enden 28, 30 des Spulenkörper 26 sind ein erster Flansch 32 sowie ein zweiter Flansch 34 vorgesehen.

Der erste Flansch 32 ist mit einem Kraftbegrenzer, hier einem Torsionsstab 36, begrenzt beweglich mit dem Spulenkörper 26 gekoppelt. Dazu ist ein erstes Ende 38 des Torsionsstabs 36 drehfest mit dem ersten Flansch 32 verbunden (siehe Figur 2). Das gegenüberliegende zweite Ende 40 des Torsionsstabs ist drehfest mit dem Spulenkörper 26 gekoppelt. Durch ein Verdrehen um die Längsachse L ist ein begrenztes Verdrehen des Spulenkörpers 26 gegen den ersten Flansch 32 bei gleichzeitiger Verformung des Torsionsstabes 36 möglich. Bei einer durch eine Zugkraft auf das Gurtband wirkenden hohen Belastung ist somit gegen den Widerstand des Torsionsstabes 36 ein begrenztes Verdrehen des Spulenkörpers 26 gegen den ersten Flansch 32 möglich.

Der zweite Flansch 34 ist aus einem ebenen Blechteil hergestellt und weist eine bezüglich der Längsachse L radial angeordnete, kreisförmige Wand 42 sowie eine an die radiale Wand 42 unmittelbar anschließende Umfangswand 44 auf, die das axiale Ende 30 des Spulenkörpers 26 in Umfangsrichtung umschließt. Die Wände 42, 44 sind einstückig miteinander ausgeführt. Der zweite Flansch 34 ist durch plastische Verformung des Blechteils in eine topfartige Gestalt umgeformt.

Wie insbesondere in Figur 1 zu sehen ist, weist die Umfangswand 44 mehrere Unterbrechungen 46 auf, die in regelmäßigen Abständen angeordnet sind und gemeinsam eine Verzahnung 48 bilden. Diese Verzahnung 48 kann mit den Rastzähnen 24 des Rahmens 14 zusammenwirken, um ein Verdrehen des zweiten Flansches 34 relativ zum Rahmen zu blockieren.

An der radialen Wand 42 des zweiten Flansches 34 ist des Weiteren ein axial gegen den Spulenkörper 26 vorstehender Anschlag 50 vorgesehen, der durch eine Prägung des Blechteils hergestellt ist. Im gleichen radialen Abstand zur Längsachse L ist am Spulenkörper 26 eine Ausnehmung 52 vorgesehen, in der ein Bolzen in axialer Richtung eingeschoben ist, der einen Anschlag 54 bildet.

In zusammengesetztem Zustand der Gurtspule 10 befindet sich der Bolzen in Drehrichtung D vor dem Anschlag 50, wobei sich die Anschläge 50, 54 in axialer Richtung überlappen.

Wird die Gurtspule 10 blockiert, indem der erste und der zweite Flansch 32, 34 im Rahmen 14 blockiert werden, erfolgt bei einer ansteigenden Kraft zunächst eine Kraftbegrenzung durch ein Verformen des Torsionsstabes 36. "Kraftbegrenzung" steht dabei für ein kontrolliertes Abwickeln von Gurtband von der Gurtspule 10, um die im Sicherheitsgurt wirkende Kraft zu begrenzen und eine kontrollierte Vorwärtsbewegung des Fahrzeuginsassen zu ermöglichen.

Während dieses Kraftbegrenzungsvorgangs wird der Spulenkörper 26 relativ zum zweiten Flansch 34 verdreht, wobei der Anschlag 54, also der Bolzen, in Drehrichtung D bewegt wird. Diese Verdrehung wird gestoppt, wenn der Bolzen in Drehrichtung D am Anschlag 50 anliegt. Dadurch erfolgt nach der Kraftbegrenzung ein Blockieren des Spulenkörpers 26 gegen den zweiten Flansch 34, sodass ein weiterer Gurtbandauszug nicht mehr möglich ist.

Wie in Figur 4 zu sehen ist, ragt der Spulenkörper 26 so weit in axialer Richtung L in den zweiten Flansch 34 hinein, dass sich das axiale Ende 30 des Spulenkörpers 26 in der Aufnahme 22 des Rahmens 14 befindet. Dadurch ist bei Blockieren der Gurtspule 10 bzw. des Spulenkörpers 26 eine direkte Abstützung des Spulenkörpers 26 möglich, also eine zuverlässige Lastübertragung in radialer Richtung vom Spulenkörper 26 über den zweiten Flansch 34 auf den Rahmen 14.

Da, wie in Figur 4 zu sehen ist, die Unterbrechungen 46 an der Umfangswand 44 durch einen Steg 56 miteinander verbunden sind, kann in diesem blockierten Zustand der zweite Flansch 34 bezüglich des Spulenkörpers 26 nicht in axialer Richtung L bewegt werden, da die Rastzähne in die Unterbrechungen 46 eingreifen. Ein axiales Abrutschen des Anschlags 50 vom Bolzen 54 ist somit zuverlässig ausgeschlossen.

Der erfindungsgemäße Aufbau der Gurtspule 10 ermöglicht also zum einen eine zuverlässige Lastübertragung auf den Rahmen 14 des Sicherheitsgurtaufrollers 12. Zum anderen ist ein Verformen bzw. ein axiales Abrutschen des zweiten Flansches 34 zuverlässig verhindert.

Der zweite Flansch 34 ist einstückig aus einem insbesondere ebenen Blechteil, beispielsweise durch Umformen hergestellt. Der Anschlag 50 sowie die Unterbrechungen 46 können beispielsweise vor dem Umformen in das noch ebene Blechteil eingebracht werden, wodurch die Herstellung wesentlich vereinfacht ist. Es ist aber auch möglich, den Anschlag 50 während des Umformprozesses einzubringen.

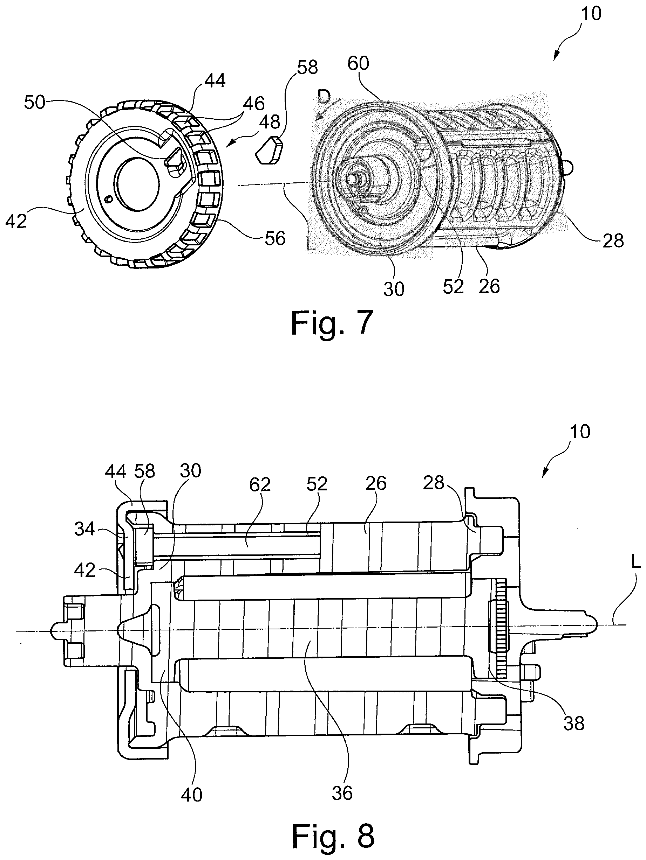

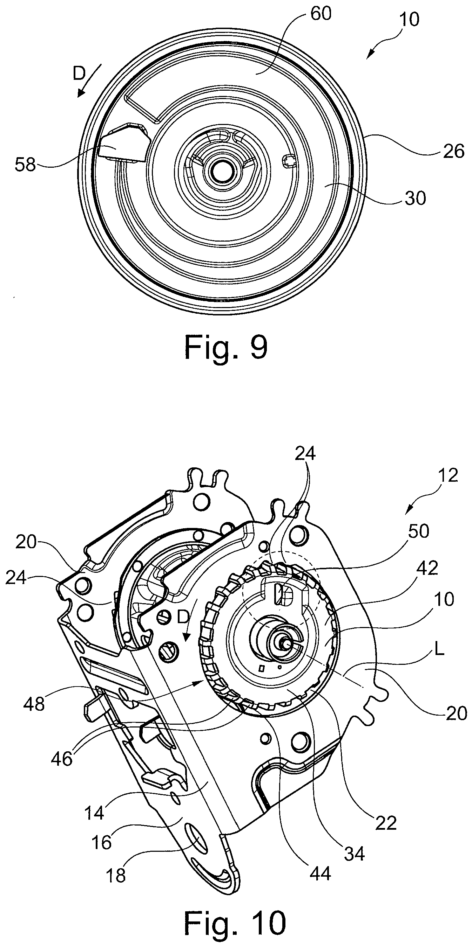

Eine zweite Ausführungsform einer erfindungsgemäßen Gurtspule 10 ist in den Figuren 7 bis 9 dargestellt. Der grundsätzliche Aufbau dieser Gurtspule 10 entspricht dem Aufbau der in den Figuren 1 bis 3 gezeigten Gurtspule 10.

Statt des Bolzens wird hier allerdings eine Schneide 58 verwendet. Die Schneide 58 kann durch den Anschlag 50 radial verdreht werden. Die an der Schneide 58 befindliche Schnittkante trägt dabei Material von dem spiralförmig an der Spule ausgebildeten Steg 60 ab. Somit kann zusätzlich zum Torsionsstab eine weitere Kraftbegrenzung bewirkt werden, die darüber hinaus auch progressiv oder degressiv ausgebildet sein kann.

Zusätzlich zu den Anschlägen 50 ist es möglich, dass zwischen dem Spulenkörper 26 und dem zweiten Flansch 34 ein Scherpin vorgesehen ist, der eine Verdrehung des zweiten Flansches 34 gegen den Spulenkörper 26 erst bei Überschreiten einer definierten Kraft zulässt. Somit ist sichergestellt, dass eine Kraftbegrenzung durch den Torsionsstab 36 erst bei Überschreiten eines vorgegebenen Kraftniveaus erfolgt.

Im Falle des in den Figuren 7 bis 9 gezeigten Ausführungsbeispiels mit einem Pin 58, der abgeschert wird, bietet der erfindungsgemäße Aufbau des zweiten Flansches 34 mit einer Umfangswand 44 zudem den Vorteil, dass abgescherte Teile des Pins 58 innerhalb des zweiten Flansches 34 verbleiben und nicht aus diesem herausfallen können.

## Patentansprüche

1. Sicherheitsgurtaufroller (12) für ein Fahrzeug, mit einem Rahmen (14), in dem eine Gurtspule (10) gelagert ist, die einen Spulenkörper (26) sowie einen ersten Flansch (32) und einen zweiten Flansch (34) aufweist, die an den axialen Enden (28, 30) des Spulenkörpers (26) vorgesehen sind und jeweils in einer Aufnahme (22) des Rahmen (14) angeordnet sind, wobei der erste Flansch (32) relativ zum Spulenkörper (26) verdrehbar ist, und wobei zwischen dem ersten Flansch (32) und dem Spulenkörper (26) ein Kraftbegrenzer vorgesehen ist, **dadurch gekennzeichnet, dass** arrder Aufnahme (22) Rastzähne (24) und am ersten Flansch (32) eine mit den Rastzähnen korrespondierende Verzahnung vorgesehen sind, und dass der zweite Flansch (34) relativ zum Spulenkörper (26) verdrehbar ist und am zweiten Flansch (34) und/oder am Spulenkörper (26) zusammenwirkende Anschläge (50, 54, 58) vorgesehen sind, die die Verdrehung des zweiten Flansches (34) relativ zum Spulenkörper (26) begrenzen, und dass der zweite Flansch (34) eine Umfangswand (44) aufweist, die das dem zweiten Flansch (34) zugewandte axiale Ende (30) des Spulenkörpers (26) in Umfangsrichtung umschließt.

2. Sicherheitsgurtaufroller nach Anspruch 1, **dadurch gekennzeichnet, dass** am ersten Flansch (32) eine Verzahnung und an der Aufnahme (22) des ersten Flansches (32) korrespondierende Rastzähne (24) vorgesehen sind.

3. Sicherheitsgurtaufroller nach Anspruch 1 oder 2, **dadurch gekennzeichnet, dass** an der Umfangswand (44) außenseitig eine Verzahnung (48) und an der Aufnahme (22) des zweiten Flansches (34) korrespondierende Rastzähne vorgesehen sind.

4. Sicherheitsgurtaufroller nach einem der vorhergehenden Ansprüche, **dadurch gekennzeichnet, dass** die Verzahnung (48) durch Unterbrechungen (46) der Umfangswand (44) gebildet ist.

5. Sicherheitsgurtaufroller nach einem der vorhergehenden Ansprüche, **dadurch gekennzeichnet, dass** der zweite Flansch (34) durch ein insbesondere umgeformtes, einstückiges Blechteil gebildet ist.

6. Sicherheitsgurtaufroller nach einem der vorhergehenden Ansprüche, **dadurch gekennzeichnet, dass** die Anschläge (50, 54, 58) in axialer Richtung (L) in entgegengesetzter Richtung vom zweiten Flansch (34) und vom Spulenkörper (26) vorstehen.

7. Sicherheitsgurtaufroller nach einem der vorhergehenden Ansprüche, **dadurch gekennzeichnet, dass** der Anschlag (50) am zweiten Flansch (34) durch eine Prägung gebildet ist.

8. Sicherheitsgurtaufroller nach einem der vorhergehenden Ansprüche, **dadurch gekennzeichnet, dass** der Anschlag am Spulenkörper durch einen Bolzen (54) gebildet ist, der in axialer Richtung (L) aus dem Spulenkörper (26) ragt.

9. Sicherheitsgurtaufroller nach einem der vorhergehenden Ansprüche, **dadurch gekennzeichnet, dass** der Anschlag am zweiten Flansch (34) mit einer Schneide (58) zusammenwirkt.

10. Sicherheitsgurtaufroller nach Anspruch 9, **dadurch gekennzeichnet, dass** die Schneide (58) Material vom Spulenkörper (26) abträgt und dabei als zusätzlicher Kraftbegrenzer wirkt.

11. Sicherheitsgurtaufroller nach einem der vorhergehenden Ansprüche, **dadurch gekennzeichnet, dass** zwischen dem zweiten Flansch (34) und dem Spulenkörper (26) ein Scherpin mit einer Sollbruchstelle vorgesehen ist.

12. Sicherheitsgurtaufroller nach einem der vorhergehenden Ansprüche, **dadurch gekennzeichnet, dass** der Kraftbegrenzer ein Torsionsstab (36) ist.

## Claims

1. Safety belt retractor (12) for a vehicle, having a frame (14) in which a belt spool (10) is mounted, which has a spool body (26) as well as a first flange (32) and a second flange (34), arranged at the axial ends (28) of the spool body (26), and are each arranged in a receptacle (22) of the frame (14), wherein the first flange (32) is rotatable relative to the spool body (26), and wherein a force limiter is provided between the first flange (32) and the spool body (26), **characterized in that** detent teeth (24) are provided on the receptacle (22) and a toothing corresponding to the detent teeth is provided on the first flange (32), and **in that** the second flange (34) can be rotated relative to the spool body (26), and cooperating stops (50, 54, 58) on the second flange (34) and/or on the spool body (26) are provided which limit the rotation of the second flange (34) relative to the spool body (26), and **in that** the second flange (34) has a circumferential wall (44) which surrounds the axial end (30) of the spool body (26) facing towards the second flange (34) in the circumferential direction.

2. Safety belt retractor according to Claim 1, **characterized in that** a toothing is provided on the first flange (32) and corresponding detent teeth (24) are provided on the receptacle (22) of the first flange (32).

3. Safety belt retractor according to claim 1 or 2, **characterized in that** a toothing (48) is provided on the outside of the peripheral wall (44) and corresponding detent teeth are provided on the receptacle (22) of the second flange (34).

4. Safety belt retractor according to one of the preceding claims, **characterized in that** the toothing (48) is formed by interruptions (46) in the circumferential wall (44).

5. Safety belt retractor according to one of the preceding claims, **characterized in that** the second flange (34) is formed by an in particular formed, one-piece sheet metal part.

6. Safety belt retractor according to one of the preceding claims, **characterized in that** the stops (50, 54, 58) project in axial direction (L) in opposite direction from the second flange (34) and from the spool body (26).

7. Safety belt retractor according to one of the preceding claims, **characterized in that** the stop (50) on the second flange (34) is formed by an embossing.

8. Safety belt retractor according to one of the preceding claims, **characterized in that** the stop on the spool body is formed by a bolt (54) which projects from the spool body (26) in the axial direction (L).

9. Safety belt retractor according to one of the preceding claims, **characterized in that** the stop on the second flange (34) cooperates with a cutting edge (58).

10. Safety belt retractor according to claim 9, **characterized in that** the cutting edge (58) removes material from the spool body (26) and thereby acts as an additional force limiter.

11. Safety belt retractor according to one of the preceding claims, **characterized in that** a shearing pin with a predetermined breaking point is provided between the second flange (34) and the spool body (26).

12. Safety belt retractor in accordance with one of the preceding claims, **characterized in that** the force limiter is a torsion bar (36).

## Revendications

1. Enrouleur de ceinture de sécurité (12) pour un véhicule, comportant un châssis (14) dans lequel est monté un enrouleur de ceinture (10), qui présente un corps de bobine (26) ainsi qu'une première bride (32) et une seconde bride (34), disposées aux extrémités axiales (28) du corps de bobine (26), et sont disposés chacun dans un réceptacle (22) du châssis (14), dans lequel la première bride (32) peut tourner par rapport au corps de bobine (26), et dans lequel un limiteur de force est prévu entre la première bride (32) et le corps de bobine (26), **caractérisé en ce que** des dents d'arrêt (24) sont prévues sur le réceptacle (22) et une denture correspondant aux dents d'arrêt est prévue sur la première bride (32), et **en ce que** la deuxième bride (34) peut être tournée par rapport au corps de bobine (26), et des butées (50, 54, 58) sur la deuxième bride (34) et/ou sur le corps de bobine (26) sont prévus qui limitent la rotation de la deuxième bride (34) par rapport au corps de bobine (26), et **en ce que** la deuxième bride (34) présente une paroi périphérique (44) qui entoure l'extrémité axiale (30) du corps de bobine (26) tournée dans la direction périphérique vers la deuxième bride (34).

2. Enrouleur de ceinture de sécurité selon la revendication 1, **caractérisé en ce qu'**une denture est prévue sur la première bride (32) et des dents d'arrêt correspondantes (24) sont prévues sur le logement (22) de la première bride (32).

3. Enrouleur de ceinture de sécurité selon la revendication 1 ou 2, **caractérisé en ce qu'**une denture (48) est prévue à l'extérieur de la paroi périphérique (44) et des dents d'arrêt correspondantes sont prévues sur le logement (22) de la seconde bride (34).

4. Enrouleur de ceinture de sécurité selon l'une des revendications précédentes, **caractérisé en ce que** la denture (48) est formée par des interruptions (46) dans la paroi périphérique (44).

5. Enrouleur de ceinture de sécurité selon l'une des revendications précédentes, **caractérisé en ce que** la deuxième bride (34) est formée par une pièce en tôle d'une seule pièce formée en particulier.

6. Enrouleur de ceinture de sécurité selon l'une des revendications précédentes, **caractérisé en ce que** les butées (50, 54, 58) font saillie en direction axiale (L) en sens inverse de la deuxième bride (34) et du corps de bobine (26).

7. Enrouleur de ceinture de sécurité selon l'une des revendications précédentes, **caractérisé en ce que** la butée (50) de la deuxième bride (34) est formée par un gaufrage.

8. Enrouleur de ceinture de sécurité selon l'une des revendications précédentes, **caractérisé en ce que** la butée sur le corps de bobine est formée par un boulon (54) qui dépasse du corps de bobine (26) dans la direction axiale (L).

9. Enrouleur de ceinture de sécurité selon l'une des revendications précédentes, **caractérisé en ce que** la butée sur la deuxième bride (34) coopère avec un tranchant (58).

10. Enrouleur de ceinture de sécurité selon la revendication 9, **caractérisé en ce que** l'arête coupante (58) enlève le matériau du corps de bobine (26) et agit ainsi comme limiteur de force supplémentaire.

11. Enrouleur de ceinture de sécurité selon l'une des revendications précédentes, **caractérisé en ce qu'**une goupille de cisaillement avec un point de rupture prédéterminé est prévue entre la deuxième bride (34) et le corps de bobine (26).

12. Enrouleur de ceinture de sécurité selon l'une des revendications précédentes, **caractérisé en ce que** le limiteur de force est une barre de torsion (36).
